Europäisches Patentamt

European Patent Office

Office européen des brevets

(19)

(11)  **EP 0 759 707 B1**

(12)  ## EUROPEAN PATENT SPECIFICATION

(45) Date of publication and mention
of the grant of the patent:
**31.10.2001  Bulletin 2001/44**

(51) Int Cl.⁷: **A23L 3/365**, A23L 1/05,
A21D 13/00

(21) Application number: **95915926.0**

(86) International application number:
**PCT/GB95/00883**

(22) Date of filing: **19.04.1995**

(87) International publication number:
**WO 95/28096 (26.10.1995 Gazette 1995/46)**

(54) **SANDWICH-LIKE FROZEN FOOD PRODUCT**

GEFRORENES SANDWICH-ARTIGES NAHRUNGSMITTEL

PRODUIT ALIMENTAIRE CONGELE DE TYPE SANDWICH

(84) Designated Contracting States:
**DE ES FR GB IE IT NL**

(30) Priority: **19.04.1994  GB 9407714
11.05.1994  GB 9409432**

(43) Date of publication of application:
**05.03.1997  Bulletin 1997/10**

(73) Proprietor: **Parker, Jeffery Keith
Basingstoke, Hampshire RG22 4NX (GB)**

(72) Inventor: **Parker, Jeffery Keith
Basingstoke, Hampshire RG22 4NX (GB)**

(74) Representative:
**McLeish, Nicholas Alistair Maxwell et al
Boult Wade Tennant
Verulam Gardens
70 Gray's Inn Road
London WC1X 8BT (GB)**

(56) References cited:
**EP-A- 0 162 644          EP-A- 0 319 287
EP-A- 0 486 736          US-A- 4 207 348
US-A- 4 741 908**

- **PATENT ABSTRACTS OF JAPAN vol. 016 no.
295 (C-0957) ,30 June 1992 & JP,A,04 079863
(YUTAKA SHIYOUJI:GOUSHI) 13 March 1992,**
- **NTIS TECH. NOTES, 1992 SPRINGFIELD,VA,US,
XP 000287764 US DEPARTMENT OF
AGRICULTURE 'No more Soggy Sandwiches'**

**Description**

The present invention relates to foodstuffs and in particular, but not exclusively, relates to a food product comprising a frozen foodstuff mixture interposed between two non-frozen, mutually aligned, farinaceous layers.

In the past many people have been persuaded to buy additional specialised or unusual cooking appliances such as toasted sandwich making machines or else have been given such appliances as a present. After a few weeks of use however, these appliances tend to be put to one side and forgotten once the user has exhausted the limited range of food products that may be prepared with the use of the appliance.

In the case of a toasted sandwich making machine, the user might typically prepare toasted sandwiches having fillings selected from the list comprising cheese, ham and cheese, cheese and tomato and cheese and onion. Despite the obvious limitations of this list, it is unusual for a user to deviate markedly from it. This is thought to be because toasted sandwiches are considered to be a convenience food and users do not therefore consider it worth while to spend much time in the preparation of a more interesting filling since to do so would detract from its quick and easy-to-use appeal. As a result the typical user soon gets bored and the toasted sandwich making machine is placed to one side and forgotten.

In other areas of the food industry it is known to provide fillings in cans or jars which are used for spreading on sandwiches or for putting in pies. Typically these fillings do not possess intrinsic structural integrity in the sense that, having spread the filling to the required shape, it is not possible to hold the filling by one corner and for it to retain that shape. Obviously some sandwich fillings having this property are known and include, for example, cold meat and slices of unmelted cheese.

Likewise, it is known to provide frozen-food, and indeed, frozen fillings which may be cooked direct from the freezer. Beefburgers are just one example of this kind of filling. Despite this and the other fillings that are known, none have been developed so as to overcome the problem outlined above, namely that of widening the range of fillings that might, without undue inconvenience, be provided within a toasted sandwich.

According to a first aspect of the present invention there is provided a food product comprising a frozen foodstuff mixture interposed between two non-frozen, mutually aligned, farinaceous layers, the frozen foodstuff mixture having a thermal diffusivity such that the temperature of the foodstuff mixture may be raised from frozen to in excess of 60°c within a period of between 3 to 7 minutes as a result of the food product being placed within a toasted sandwich making machine, the foodstuff mixture including a thickner capable of binding moisture within the foodstuff mixture during freezing, thawing and re-heating so as to prevent the inner surfaces of the farinaceous layers from becoming damp or soggy during said re-heating process.

According to a second aspect of the present invention there is provided a method of preparing a food product comprising the steps of providing a first layer of non-frozen, farinaceous foodstuff; placing on said layer a frozen foodstuff mixture, said frozen foodstuff mixture having a thermal diffusivity such that the temperature of the foodstuff mixture may be raised from frozen to in excess of 60°c within a period of between 3 to 7 minutes as a result of the food product being placed within a toasted sandwich making machine, the foodstuff mixture including a thickner capable of binding moisture within the foodstuff mixture during freezing,-thawing and re-heating so as to prevent the inner surfaces of the farinaceous layers from becoming damp or soggy during said re-heating process; providing a second layer of non-frozen, farinaceous foodstuff and placing said second layer on said frozen foodstuff mixture in such a way as to be in substantial alignment with said first layer of farinaceous foodstuff; and exposing the farinaceous foodstuff and frozen foodstuff mixture to heat for a period sufficient to defrost the frozen foodstuff mixture and raise the farinaceous foodstuff and the foodstuff mixture to a temperature falling within an acceptable temperature range.

A number of embodiments of the present invention will now be described by way of example with reference to the accompanying drawings in which;

Figure 1 is a schematic perspective view of a frozen foodstuff mixture placed centrally on a slice of bread; and
Figure 2 is a schematic view of two slices of bread with a frozen foodstuff mixture interposed between the two, the combination being located between the heatable surfaces of a toasted sandwich making machine.

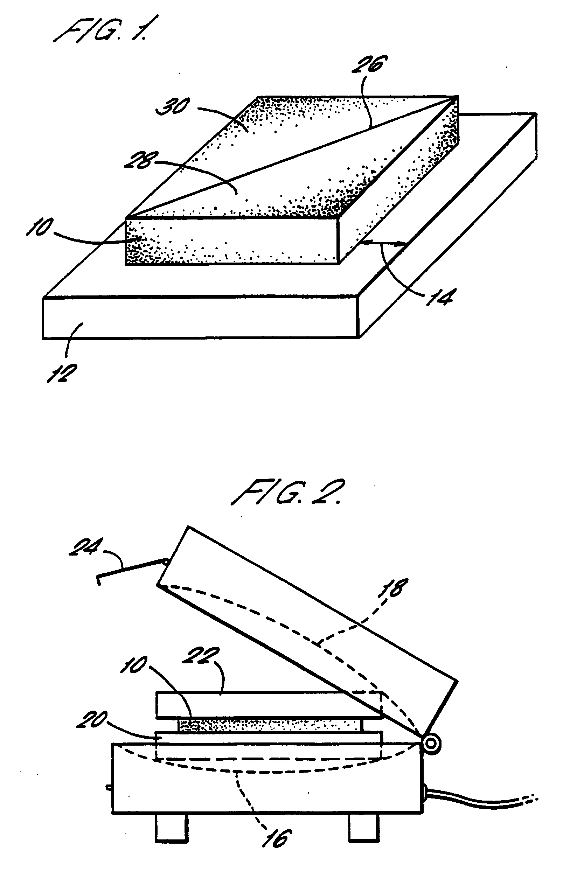

Referring to Figure 1 there is shown a block 10 of frozen foodstuff mixture placed on top of a slice of bread 12. As shown, the block 10 preferably has a cross-sectional area which is less than that of the slice of bread 12 and which enables the definition of a border region 14 surrounding the block when the block is placed centrally on the slice of bread. Since most bread which is used for sandwiches is of substantially rectangular cross-section, so too is the block of frozen foodstuff mixture 10. Indeed, the block 10, when frozen, generally defines an approximation to a parallelepiped and has sides within the range between 0.05m and 0.15m in length and a height within the range between 0.003m and 0.015m. Preferably, when frozen, the block 10 has sides within the range between 0.08m and 0.12m and a height within the range between 0.005 and 0.01m.

The foodstuff mixture from which the block 10 is formed may be of any known recipe and may comprise, for example, a Chicken Tikka mixture, a Chilli Con Carne mixture or indeed any other flavour of mixture. Typically however, the foodstuff mixture will comprise one or more principal ingredients in a sauce matrix. As a result, when defrosted the foodstuff mixture will form a glop (ie a soft, semi-solid matrix) which does not possess intrinsic structural integrity in the sense that it would not be possible to hold the block by one corner and expect the block to maintain its parallelepiped shape.

In order to prepare a toasted sandwich using the block 10 of frozen foodstuff mixture it is preferable to use a toasted sandwich making machine of the type shown schematically in Figure 2 and which comprises two heatable surfaces 16, 18, hinged along one edge. A first slice of bread 20 is placed on the lower of the two heatable surfaces 16. A block 10 of a previously prepared foodstuff mixture is then selected and taken from the freezer where it has been stored along with perhaps blocks of a number of different flavours and placed centrally on the first slice of bread 20. A second slice of bread 22 is then placed on top of the block 10 so as to be in alignment with the first slice 20. The upper heatable surface 18 is then pivoted down towards the lower heatable surface 16 thereby enclosing both the block of frozen foodstuff mixture 10 and the two slices of bread 20, 22. The two heatable surfaces 16, 18 may be held in this closed position by means of a suitable catch 24. The two surfaces 16, 18 are then heated during which time sufficient heat is transferred to the sandwich to cause the two slices of bread 20, 22 to brown and the block 10 of frozen foodstuff mixture to not only defrost but to get to an acceptably hot and uniform temperature. Because the foodstuff mixture has been previously prepared, it only requires to be re-heated in order to be ready for consumption. Even though the block 10 is not directly exposed to the heatable surfaces 16, 18, the heating of the two slices of bread 20, 22 by a combination of conductive and radiative processes causes the bread, which has a high water content, to produce a quantity of steam which can not escape from the sandwich and it is this steam, together with the heat conducted through the bread that raises the temperature of the block.

As the block 10 defrosts it will of course start to flow and loose its parallelepiped shape. However, leakage of foodstuff mixture from the two slices of bread 20, 22 is substantially prevented by the clamping action of the two heatable surfaces 16, 18 which pinch together the border regions 14 of the two slices of bread in order to create a seal. As is well known, in order to enhance this sealing action the two heatable surfaces 16, 18 may be provided with mutually opposed projections which are caused to abut when the heatable surfaces are in the closed position.

When the two slices of bread 20, 22 are browned sufficiently and the foodstuff mixture 10 has been raised to an acceptable temperature, the catch 24 is disengaged and the upper of the two heatable surfaces 18 raised so as to allow access to the now toasted sandwich.

As is well known, in order to achieve improved browning of the slices of bread 20, 22 their outwardly directed surfaces may be spread with a small quantity of butter or margarine.

As is also well known, the two surfaces 16, 18 may be preheated prior to the placement of the first slice of bread 20 onto the lower heatable surface 16. Under such circumstances the total cooking time is typically within the range of between three to seven minutes.

In order that the block 10 may be heated to a sufficiently uniform and acceptable temperature by the time the slices of bread 20, 22 have been toasted it is necessary for the block to have a weight falling within a predetermined range. Typically the weight of the block 10 will lie within the range between 0.057kg (2oz) and 0.17kg (6oz). Preferably the weight of the block 10 will lie within the range between 0.057kg (2oz) and 0.114kg (4oz).

In addition to the block 10 having a predetermined weight, it has also been found necessary for the sauce which surrounds the principal ingredients making up the foodstuff mixture to have a number of distinguishing characteristics. In particular it has been found necessary for the sauce to contain a thickner capable of contributing to the physical structure of the foodstuff mixture and preventing it from becoming too runny. A sauce which is too runny tends to ooze out from between the slices of bread 20,22 however good the clamping action of the two heatable surfaces 16 and 18 and results in overheating or burning of the sauce that has leaked out and necessitates the subsequent cleaning of the toasted sandwich making machine.

Clearly the thickner will also need to satisfy certain other criteria. It must not spoil the flavour or the texture of the foodstuff mixture. In particular, it should not give rise to excessive gelatinisation. Neither should the thickner adversely affect the colour of the foodstuff mixture.

Equally importantly, the thickner must be capable of binding sufficient of the moisture within the foodstuff mixture to prevent the inner surfaces of the slices of bread 20,22 from becoming damp or soggy by the time their outer surfaces are toasted. Furthermore the thickner must be able to exhibit this stability not only on heating but also during freezing, frozen storage and thawing. Thus, for example, the water within the sauce matrix must remain bound by the thickner during freezing and not separate out to form ice crystals. Such ice crystals would release water during thawing which is an inevitable part of the re-heating process within the sandwich and could lead to an unacceptable amount of free moisture soaking the inner surfaces of the slices of bread 20,22 and result in a loss of toasted texture.

Finally, the thickner must not adversely affect the thermal diffusivity of the foodstuff mixture. Thermal diffusivity ($\alpha$) is a measure of the rate at which heat diffuses through a substance and is defined by the expression

$$\alpha = \frac{\lambda}{\rho c}$$

Where $\lambda$ is the thermal conductivity of the substance, $\rho$ is its density and $c$ is the specific heat capacity.

The thermal diffusivity of the foodstuff mixture must be such that a typical toasted sandwich making machine is capable of elevating the temperature of the coldest points within the block 10 from frozen to in excess of 60°C (typically between 60°C and 65°C) within the three to seven minutes it typically takes for the slices of bread 20,22 to attain but not exceed a desired degree of browning and toasted texture. Typically the coldest points within the block 10 will be at its centre. However, if the toasted sandwich making machine is designed to cut the toasted sandwiches they make along one or more diagonals, the coldest points will typically lie at or close to the geometrical centres of the resulting triangles.

As can be seen from the above expression, the thermal diffusivity ($\alpha$) of the foodstuff mixture can be controlled by adjusting the density ($\rho$). Whilst the addition of a thickner to the sauce typically increases its density and therefore decreases the thermal diffusivity of the foodstuff mixture (which, as has already been seen, is desirably unusually high for a foodstuff product), the amount of thickner required is usually very small since too much thickner is likely to adversely affect the texture of the product. Nevertheless the addition of the thickner changes the structure of the sauce matrix and so has an effect on the thermal diffusivity which far outweighs its contribution to the sauce density.

Clearly the identity of the principal ingredients within the foodstuff mixture will also have an affect on the density of that mixture. In this regard it has been found that poultry and fish are of particular use as principal ingredients.

A number of specific food products embodying the present invention will now be described by way of example and in each case arrowroot is used as the thickner. It will be apparent to those skilled in the art however, that the present invention is not limited to the use of arrowroot which just happens to be a farinaceous starch that in use is capable of forming a light gel having the desired properties. Other starch thickners may be equally appropriate as may certain gums and pectins provided they satisfy the criteria outlined above.

EXAMPLE 1

| Chicken Tikka | |
|---|---|
| Composition: | Weight (g) |
| Shallots | 34.1 |
| Tikka paste | 48.4 |
| Tinned Chopped Tomato | 92.4 |
| Chopped Cooked Chicken (leg) | 172.7 |
| Chicken stock | 96.9 |
| Yoghurt (plain, low fat) | 105.1 |
| Margarine | 15.2 |
| Arrowroot Powder | 7.7 |
| Water | 32.4 |
| Total (before cooking) | 604.9 |

Starting at an ambient temperature of 22°c the margarine is melted in a pan to which the shallots are then added. The tomato, tikka paste and stock are then added in turn followed by the cooked chicken. Shortly before the cooking is completed a small amount of arrowroot powder is added amounting to only 1.3% of the total pre-cooked weight of the mixture. The mixture is then stirred and removed from the heat to be placed in moulds and subsequently frozen. A temperature profile of the cooking process is shown below.

| Processing Temperature Profile | | |
|---|---|---|
| Elapsed Time (min) | Temp. (°C) | Process Step |
| 0 | 22 | ambient |
| 1 | 107 | melt margarine |
| 2 | 97 | cook shallots |
| 3 | 101 | add tomato |

(continued)

| Processing Temperature Profile | | |
|---|---|---|
| Elapsed Time (min) | Temp. (°C) | Process Step |
| 4 | 114 | |
| 4.5 | 46 | add tikka paste |
| 5 | 60 | add stock |
| 5.5 | 73 | |
| 6 | 92 | |
| 6.5 | 98 | |
| 7 | 99 | |
| 7.5 | 83 | |
| 8 | 63 | add cooked chicken |
| 8.5 | 58 | |
| 9. | 56 | |
| 9.5 | 88 | |
| 10 | 96 | |
| 11.5 | 99 | add arrowroot |
| 12 | 98 | remove from heat, mould and freeze |

In order to prepare a toasted sandwich using the chicken tikka mix, the same process steps are performed as have already been described in relation to a generalized frozen foodstuff mixture. In this particular example a Morphy Richards toasted sandwich making machine was used in conjunction with Sainsbury's standard thick sliced bread. 72.3g of frozen chicken tikka mix was used and a temperature sensor placed at the slowest heating point recorded the following temperature profile during the toasting process.

| Processing Temperature Profile | |
|---|---|
| Heating Time (Min) | Temp. (°c) |
| 0 | -9 |
| 1 | -4 |
| 2 | -3 |
| 2.5 | 0 |
| 3 | +3 |
| 3.5 | +6 |
| 4 | +11 |
| 4.5 | +22 |
| 5 | +49 |
| 5.5 | +68 |

EXAMPLE 2

| Salmon and Cucumber | |
|---|---|
| Composition | Weight (g) |
| Arrowroot | 24.1 |
| Water | 38.0 |
| Cucumber Mix | 172.2 |
| Cream | 59.3 |
| Fish Stock | 181.1 |
| Cooked Salmon | 147.1 |

(continued)

| Salmon and Cucumber | |
|---|---|
| Composition | Weight (g) |
| Butter | 31.3 |
| Total before cooking | 653.1 |

Again, starting from an ambient temperature of 22°c the cucumber is placed in a pan and cooked. The fish stock is added to the cucumber in two stages and then the cream. A small quantity of arrowroot amounting to 3.7% of the pre-cooked weight of the mixture is then added, the mixture stirred and removed from the heat. Finally the salmon is flaked and added to the mixture before the mixture is again placed in moulds and frozen. A temperature profile of the cooking process is shown below.

| Processing Temperature Profile | | |
|---|---|---|
| Elapsed Time (min) | Temp. (°C) | Process Step |
| 0 | 22 | ambient |
| 1 | 101 | cook cucumber |
| 2 | 95 | |
| 3 | 74 | add fish stock |
| 4 | 66 | add more fish stock |
| 5 | 69 | |
| 6 | 83 | |
| 7 | 103 | add cream |
| 8 | 99 | |
| 9 | 88 | add arrowroot |
| 10 | 99 | remove from heat |
| 12 | -- | add flaked salmon |

As before, in order to prepare a toasted sandwich using the salmon and cucumber mix, the same process steps are performed as have already been described. On this occasion a temperature sensor placed at the slowest heating point recorded the following temperature profile during the toasting process for a mix having a pre-cooked weight of 0.099kg.

| Elapsed Time (Min) | Temp (°C) |
|---|---|
| 0 | -9 |
| 1 | -7 |
| 2 | -4 |
| 2.5 | + 2 |
| 3 | + 5 |
| 3.5 | + 21 |
| 4 | + 36 |
| 4.5 | + 49 |
| 5 | + 60 |
| 5.5 | + 69 |

As has already been mentioned in relation to Examples 1 and 2, in order to prepare a block 10 of frozen foodstuff mixture of the kind illustrated in Figures 1 and 2 a suitable quantity from a much larger batch may be injected, pumped or otherwise poured into a mould having the desired dimensions. The mould is then placed within a suitable freezer compartment so as to lower the temperature of the foodstuff mixture until such time as it solidifies. The frozen foodstuff mixture may then be removed as a block from the mould, repackaged and returned to the freezer compartment for storage or else may be stored for future use within the mould itself. This last possibility is of particular benefit in cases where the mould simply comprises a plastics bag of predetermined dimensions.

As is well known, some existing toasted sandwich making machines are designed so as to cut the toasted sandwiches that they make along at least one diagonal line. In order to provide a frozen foodstuff mixture for use with these machines, the block 10 may be provided with one or more diagonal lines of weakness 26 as shown in Figure 1. In this way, when the block 10 is frozen it may be snapped into two halves 28 and 30 along the line of weakness 26. One half of the frozen foodstuff mixture may then be placed on either side of the diagonal cutting edge provided on the toasted sandwich making apparatus. Alternatively, the block 10 may be snapped in two along the line of weakness 26 by simply pivoting the upper heatable surface 18 toward the lower heatable surface 16 in such a way as to enclose the block and the two slices of bread 20, 22.

One or more diagonal lines of weakness may be incorporated within the frozen foodstuff mixture during its preparation simply by pressing an appropriately shaped tool into the mixture once the mixture has been poured into the mould. Alternatively, the mould itself may define the line of weakness.

**Claims**

1. A food product comprising a frozen foodstuff mixture interposed between two non-frozen, mutually aligned, farinaceous layers, the frozen foodstuff mixture having a thermal diffusivity such that the temperature of the foodstuff mixture may be raised from frozen to in excess of 60°c within a period of between 3 to 7 minutes as a result of the food product being placed within a toasted sandwich making machine, the foodstuff mixture including a thickener capable of binding moisture within the foodstuff mixture during freezing, thawing and re-heating so as to prevent the inner surfaces of the farinaceous layers from becoming damp or soggy during said re-heating process.

2. A food product in accordance with claim 1, wherein said foodstuff mixture defines a block that, when frozen, has a shape approximating to a parallelepiped having sides within the range between 0.05m and 0.15m in length and a height within the range between 0.003m and 0.015m.

3. A food product in accordance with any of claims 1 or claim 2, wherein said foodstuff mixture does not possess intrinsic structural integrity when defrosted.

4. A food product in accordance with any of claims 1 to 3, wherein said frozen foodstuff mixture is provided with at least one line of weakness such that, when frozen, the foodstuff mixture may be snapped in two along said line.

5. A food product in accordance with any preceding claim, wherein the mixture has a weight within the range between 0.057kg and 0.17kg.

6. A method of preparing a food product comprising the steps of providing a first layer of non-frozen, farinaceous foodstuff; placing on said layer a frozen foodstuff mixture, said frozen foodstuff mixture having a thermal diffusivity such that the temperature of the foodstuff mixture may be raised from frozen to in excess of 60°c within a period of between 3 to 7 minutes as a result of the food product being placed within a toasted sandwich making machine, the foodstuff mixture including a thickener capable of binding moisture within the foodstuff mixture during freezing, thawing and re-heating so as to prevent the inner surfaces of the farinaceous layers from becoming damp or soggy during said re-heating process; providing a second layer of non-frozen, farinaceous foodstuff and placing said second layer on said frozen foodstuff mixture in such a way as to be in substantial alignment with said first layer of farinaceous foodstuff; and exposing the farinaceous foodstuff and frozen foodstuff mixture to heat for a period sufficient to defrost the frozen foodstuff mixture and raise the farinaceous foodstuff and the foodstuff mixture to a temperature falling within an acceptable temperature range.

**Patentansprüche**

1. Nahrungsmittel umfassend eine gefrorene Nahrungsmittelmischung, die zwischen zwei nicht-gefrorenen, gegenseitig angeordneten, stärkehaltigen Lagen eingelegt ist, wobei die gefrorene Nahrungsmittelmischung ein solches Wärmeleitvermögen aufweist, dass die Temperatur der Nahrungsmittelmischung innerhalb einer Zeitspanne von 3 bis 7 Minuten vom gefrorenen Zustand auf über 60 °C erhöht werden kann, wenn das Nahrungsmittel in einen Sanwichtoaster gelegt wird, wobei die Nahrungsmittelmischung ein Quellmittel enthält, das Feuchtigkeit in der Nahrungsmittelmischung während dem Einfrieren, Auftauen und Wiederaufwärmen binden kann, um so zu verhindern, dass die inneren Oberflächen der stärkehaltigen Lagen während dem Vorgang des Wiederaufwärmens feucht oder durchweicht werden.

**2.** Nahrungsmittel nach Anspruch 1, wobei die Nahrungsmittelmischung einen Block definiert, der in gefrorenem Zustand die annähernde Form eines Parallelepipeds aufweist, das Seitenlängen im Bereich zwischen 0,05 m und 0,15 m und eine Höhe im Bereich zwischen 0,003 m und 0,015 m aufweist.

**3.** Nahrungsmittel nach einem der Ansprüche 1 oder 2, wobei die Nahrungsmittelmischung keine innere strukturelle Integrität besitzt, wenn sie aufgetaut ist.

**4.** Nahrungsmittel nach einem der Ansprüche 1 bis 3, wobei die gefrorene Nahrungsmittelmischung mit wenigstens einer Sollbruchlinie bereitgestellt ist, so dass die gefrorene Nahrungsmittelmischung entlang dieser Linie entzweigebrochen werden kann.

**5.** Nahrungsmittel nach einem der vorhergehenden Ansprüche, wobei die Mischung ein Gewicht im Bereich zwischen 0,057 kg und 0,17 kg aufweist.

**6.** Verfahren zur Herstellung eines Nahrungsmittels umfassend die Schritte des Bereitstellens einer ersten Lage eines nicht-gefrorenen, stärkehaltigen Nahrungsmittels; des Aufbringens einer gefrorenen Nahrungsmittelmischung auf die Lage, wobei die gefrorene Nahrungsmittelmischung ein solches Wärmeleitvermögen aufweist, dass die Temperatur der Nahrungsmittelmischung innerhalb einer Zeitspanne von 3 bis 7 Minuten vom gefrorenen Zustand auf über 60 °C erhöht werden kann, wenn das Nahrungsmittel in einen Sandwichtoaster gelegt wird, wobei die Nahrungsmittelmischung ein Quellmittel enthält, das Feuchtigkeit in der Nahrungsmittelmischung während dem Einfrieren, Auftauen und Wiederaufwärmen binden kann, um so zu verhindern, dass die inneren Oberflächen der stärkehaltigen Lagen während dem Vorgang des Wiederaufwärmens feucht oder durchweicht werden; des Bereitstellens einer zweiten Lage eines nicht-gefrorenen, stärkehaltigen Nahrungsmittels und des Aufbringens der zweiten Lage auf die gefrorene Nahrungsmittelmischung, so dass sie im Wesentlichen nach der ersten Lage des stärkehaltigen Nahrungsmittels ausgerichtet ist; und des Wärmebehandelns des stärkehaltigen Nahrungsmittels und der gefrorenen Nahrungsmittelmischung für eine ausreichende Zeitspanne, um die gefrorene Nahrungsmittelmischung aufzutauen und die Temperatur des stärkehaltigen Nahrungsmittels und der Nahrungsmittelmischung auf eine Temperatur zu erhöhen, die in einem annehmbaren Temperaturbereich liegt.

**Revendications**

**1.** Produit alimentaire comprenant un mélange alimentaire congelé interposé entre deux couches farineuses non congelées, mutuellement alignées, le mélange alimentaire congelé ayant une diffusivité thermique telle que la température du mélange alimentaire peut être élevée à partir de l'état congelé jusqu'à plus de 60°C dans une période comprise entre 3 et 7 minutes par suite de la mise en place du produit alimentaire dans une machine de production de sandwiches grillés, le mélange alimentaire comprenant un épaississant capable de lier l'humidité dans le mélange alimentaire pendant la congélation, la décongélation et le réchauffage afin d'empêcher les surfaces intérieures des couches farineuses de devenir humides ou pâteuses pendant ledit processus de réchauffage.

**2.** Produit alimentaire selon la revendication 1, dans lequel ledit mélange alimentaire définit un bloc qui, lorsqu'il est congelé, a une forme se rapprochant de celle d'un parallélépipède ayant des côtés dans la plage allant de 0,05 mètre à 0,15 mètre en longueur et une hauteur dans la plage allant de 0,003 mètre à 0,015 mètre.

**3.** Produit alimentaire selon l'une quelconque de la revendication 1 ou de la revendication 2, dans lequel ledit mélange alimentaire ne possède pas une intégrité structurelle intrinsèque lorsqu'il est décongelé.

**4.** Produit alimentaire selon l'une quelconque des revendications 1 à 3, dans lequel ledit mélange alimentaire congelé est pourvu d'au moins une ligne d'affaiblissement telle que, lorsqu'il est congelé, le mélange alimentaire peut être cassé en deux suivant ladite ligne.

**5.** Produit alimentaire selon l'une quelconque des revendications précédentes, dans lequel le mélange a un poids dans la plage allant de 0,057 kg à 0,17 kg.

**6.** Procédé de préparation d'un produit alimentaire comprenant les étapes consistant à se procurer une première couche d'une denrée alimentaire farineuse non congelée ; à placer sur ladite couche un mélange alimentaire congelé, ledit mélange alimentaire congelé ayant une diffusivité thermique telle que la température du mélange alimentaire peut être élevée à partir de l'état congelé jusqu'à plus de 60°C dans une période comprise entre 3 et 7 minutes par suite de la mise en place du produit alimentaire dans une machine de production de sandwiches grillés, le mélange alimentaire comprenant un épaississant capable de lier l'humidité dans le mélange alimentaire pendant la congélation, la décongélation et le réchauffage afin d'empêcher les surfaces intérieures des couches farineuses de devenir humides ou pâteuses pendant ledit processus de réchauffage ; on se procure une seconde couche de denrées alimentaires farineuses non congelées et on place ladite seconde couche sur ledit mélange alimentaire congelé d'une manière telle qu'elle soit sensiblement en alignement avec ladite première couche de denrées alimentaires farineuses ; et on expose la denrée alimentaire farineuse et le mélange alimentaire congelé à de la chaleur pendant une période suffisante pour décongeler le mélange alimentaire congelé et porter la denrée alimentaire farineuse et le mélange alimentaire à une température comprise dans une plage acceptable de températures.

EP 0 759 707 B1

FIG. 1.

FIG. 2.

10